# EUROPEAN PATENT SPECIFICATION

(11) **EP 4 540 100 B1**
(45) Date of publication and mention of the grant of the patent: **11.11.2026**
(21) Application number: 23827725.5
(22) Date of filing: 16.06.2023
(51) Int. Cl.: B60N 2/58, A47C 31/02, B68G 7/052, B68G 7/12

(54) **RETAINER FOR A SEAT ASSEMBLY AND METHOD OF ASSEMBLY**
HALTER FÜR EINE SITZANORDNUNG UND MONTAGEVERFAHREN
DISPOSITIF DE RETENUE POUR UN ENSEMBLE SIÈGE ET PROCÉDÉ D'ASSEMBLAGE

(30) Priority: 20.06.2022 US 202263366676 P; 19.01.2023 DK PA202370028
(43) Date of publication of application: 23.04.2025
(73) Proprietor: Lear Corporation, Southfield, MI 48033 (US)
(72) Inventor: ABDELLA, David, Royal Oak, Michigan 48073 (US); HALLOCK, Joshua, Warren, Michigan 48088 (US); SWIKOSKI, Lisa, Bloomfield, Michigan 48324 (US); BLAIR, Samuel, Troy, Michigan 48083 (US)
(74) Representative: Grünecker Patent- und Rechtsanwälte PartG mbB
(86) International application number: PCT/US2023/025543
(87) International publication number: WO 2023/249895

(56) References cited:
- FR-A1- 2 432 108
- JP-A- 2001 070 106
- US-B1- 6 283 552
- US-B2- 7 506 939
- US-B2- 8 752 902
- US-B2- 8 752 902

## Description

### TECHNICAL FIELD

The present invention relates to a retainer, a seat assembly having a retainer, and a method of assembly. For example, JP2001070106A discloses a cushion body suitable for seats installed in vehicles such as vehicles, ships and airplanes, furniture such as sofas and beds, and a method for manufacturing the same. A resin plate with a plurality of retaining portions is used to attach a trim cover to a mesh of the cushion body.

It is an object of the present invention is to improve attaching a cover to a cushion member while reducing manufacturing complexity. This object is solved by a retainer according to claim 1 or a method for assembling a seat assembly according to claim 12.

### BRIEF DESCRIPTION OF THE DRAWINGS

Figure 1 a perspective view of a non-limiting, exemplary embodiment of a seat assembly;
Figures 2A-2C are perspective views of non-limiting, exemplary embodiments of a retainer according to the present invention;
Figure 3 is side view of a non-limiting, exemplary embodiment of a retainer according to the present disclosure;
Figure 4 is a side view of a non-limiting, exemplary embodiment of a retainer according to the present invention inserted into a cushion material; and
Figure 5 is an exemplary flowchart illustrating a non-limiting, exemplary embodiment of a method according to the present invention.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, features, and elements have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the invention.

"One or more" and/or "at least one" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

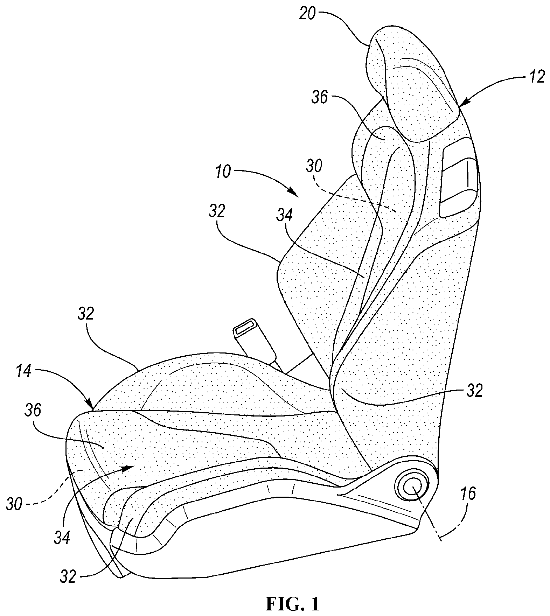

Referring to Figure 1, a perspective view of a non-limiting, exemplary embodiment of a seat assembly 10 is shown. The seat assembly 10 may be configured for use in a vehicle, such as a motor vehicle like a car or truck. The seat assembly 10 may include a seat back 12 and a seat bottom 14. The seat back 12 may be configured to support the back of a seat occupant. The seat bottom 14 may be configured to support a seat occupant. In a vehicular application, the seat bottom 14 may be mounted to a support surface, such as a vehicle floor.

The seat back 12 may be pivotable about an axis 16 with respect to the seat bottom 14. For example, one or more recliner mechanisms, pivot pins, or the like may pivotally connect the seat back 12 to the seat bottom 14. Alternatively, the seat back 12 or a portion thereof may not be pivotally connected to the seat bottom 14. For instance, the seat back 12 may be pivotally mounted to a vehicle body structure, such as may be the case in some bench seat configurations.

The seat back 12 may include a head restraint 20 that may be configured to support the head of a seat occupant. The head restraint 20 may be disposed at the top of the seat back 12. The head restraint 20 may be unitary with the seat back 12 or may be a separate component that is adjustably positionable with respect to the top of the seat back 12.

The seat back 12 and the seat bottom 14 may each have at least one seat cushion 30. The seat back 12 and the seat bottom 14 may each also have side bolsters 32 and a center seating portion 34 of the cushion 30. A seat component 36 may be secured to the cushion 30 with one or more retainers as will be discussed in more detail below.

The seat component 36 may be disposed over or upon the cushion 30. The seat component 36 may have any suitable configuration and be of any suitable type. For instance, the seat component 36 may be a trim cover, trim cover material, or trim cover assembly that provides at least a portion of a visible exterior surface of the seat assembly 10. The trim cover 36 may include a plurality of trim panels that may be assembled in any suitable manner, such as by stitching. The trim panels may be made of any suitable material or materials, such as fabric, leather, vinyl, or combinations thereof. The seat component 36 may also or alternatively be a component that is concealed by or disposed under a trim cover and is disposed on the cushion 30, such as a temperature adjusting device like a heating pad or heating mat, an inflatable device for enhancing comfort of a seat occupant like a lumbar support or that provide massage functionality, an air-permeable material that facilitates airflow for a ventilated seat, or the like.

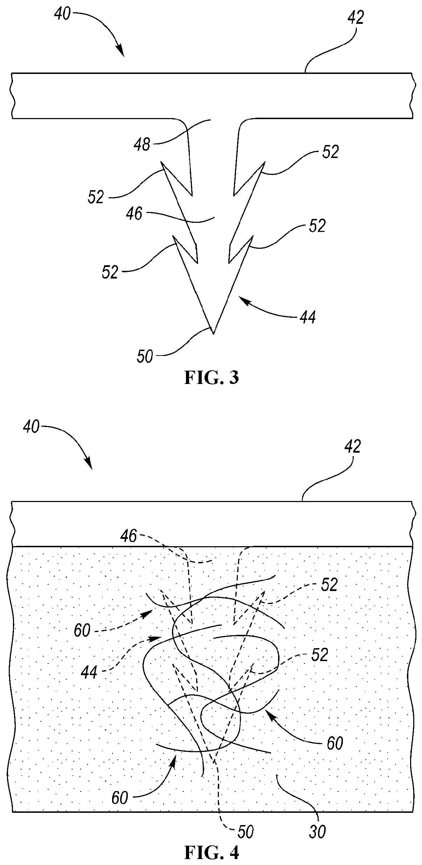

The cushion 30 may be at least partially concealed by the seat component 36 and may be directly or indirectly supported by a support structure of the seat assembly 10, such as a frame, panel, support wires, or the like. The cushion 30 includes a three-dimensional mesh structure formed of randomly looped and bonded filaments 60, only a small number of examples of which are shown in Figure 4, pictorially represented by randomly drawn lines for simplicity. For example, the filaments 60 may be extruded filaments that are made of a polymeric material, such as a thermoplastic resin that is polyamide based, polyester based, polyimide based, polyolefin based, polypropylene based, polystyrene based, or combinations thereof. As one example, filaments 60 may be made of linear low-density polyethylene (LLDPE). The extruded filaments 60 may be randomly looped, curled, or entangled and may be bonded together where one filament 60 contacts another, thereby resulting in a lightweight, air permeable cushion having openings or voids between the filaments 60. As such, the cushion 30 may not be made of foam, such as urethane foam, and may partially or completely replace a conventional urethane foam cushion. Alternatively, the cushion may be a conventional foam cushion, such as a urethane foam cushion.

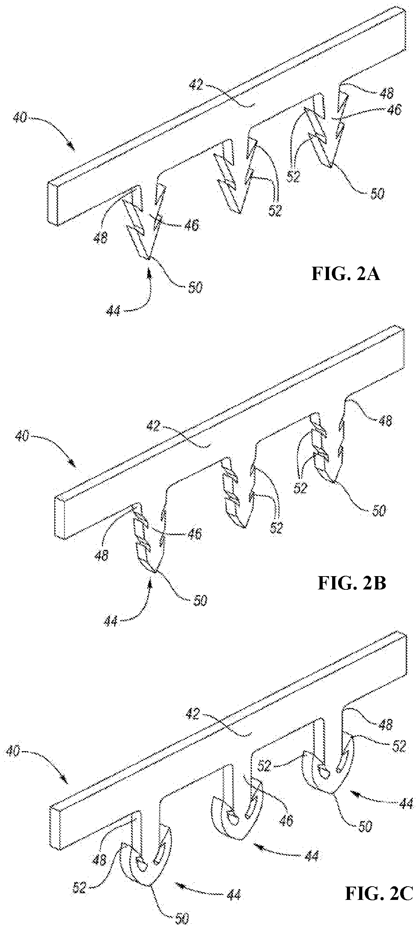

Figures 2A-2C are perspective views of non-limiting, exemplary embodiments of a retainer 40 according to the present invention. As seen therein, and with continuing reference to Figure 1, the retainer 40 in each embodiment includes an elongated member 42 and a plurality of anchors 44. In that regard, the elongated member 42 comprises a planar strip and each of the plurality of anchors 44 is planar. Nevertheless, the elongated member 42 and anchors 44, individually or in combination, may take or be provided with any other suitable configuration.

In the embodiments shown in Figures 2A-2C, the elongated member 42 and the plurality of anchors 44 are formed as an integral piece, but may alternatively be individual components attached to each other In that regard, the retainer 40, including the elongated member 42 and the anchors 44, may be formed by injection molding, extrusion and die cutting, or by stamping or cutting (e.g., laser cutting) from a sheet. The elongated member 42 is also configured or provided for attachment to a trim cover 36. In that regard, the elongated member 42 may be sewn or stitched to the trim cover 36, although other known means or methods of attachment may alternatively be employed. The elongated member 42, with anchors 44, may also be cut to any length suitable or necessary for use in a particular application or environment wherein a component 36 is secured to a cushion 30 as described herein.

Each of the plurality of anchors 44 extending from the elongated member 42. Each of the plurality of anchors 44 has a body 46 with a first end 48 attached to the elongated member 42 and a second end 50 opposite the first end 48. The second end 50 terminates in a pointed tip. Each of the plurality of anchors 44 has a plurality of barbs 52, each barb 52 extending from the body 46 in a direction away from the tip at the second end 50 of the anchor 44. For each of the plurality of anchors 44, a material of a cushion 30 is gripped between the body 46 and each of the plurality of barbs 52 when the anchor 44 is inserted into the cushion 30 (see Figure 4). In that regard, the pointed tip at the second end 50 of each anchor 44 may serve or function to pierce the material of the cushion 30.

It is noted that the anchors 44, including the barbs 52, illustrated in Figures 2A-2C are exemplary only, and may generally take or be provided with any shape. The anchors 44 shown in Figure 2A are provide with a shape that may be described as an inverted "Christmas tree," while the anchors 44 shown in Figure 2C are provided with a shape that may be described as a "ship anchor." In that regard, Figure 3 is side view of a non-limiting, exemplary embodiment of a retainer 40 according to the present disclosure. More specifically, a side view is shown of a single anchor 44 having an inverted "Christmas tree" shape from the embodiment of the retainer 40 of Figure 2A.

In that regard, the size and shape of the individual anchors 44 extending from the elongated member 42 may be different. For example, the shape of the anchors 44 extending from an elongated member 42 may alternate between an inverted "Christmas tree" and a "ship anchor," as respectively shown in Figures 2A and 2C. Moreover, while shown as equally spaced apart along the length of the elongated member 42, the distance between adjacent anchors 44 may be different and may vary. As well, the number of anchors per unit length of the elongated member 42 (i.e., density) may also vary.

It is also noted that the anchors 44 may generally take or be provided with any size. In that regard, an anchor 44 having a second end 50 terminated in a pointed tip with a sharp or acute angle and having a smaller cross-sectional area (for a cross-section taken across the body 46 of the anchor 44 in a direction parallel to the elongated member 42) requires the application of less force to insert the anchor 44 into a material of a cushion 30 than does an anchor 44 having a second end 50 terminating in a pointed tip with a greater angle and having a larger cross-sectional area. Thus, the anchors 44 of the embodiment shown in Figure 2C generally require the application of a greater force for insertion into a cushion 30 than do the anchors 44 of the embodiments shown in Figures 2A and 2B.

It is still further noted that the number of barbs 52 for each of the anchors 44 illustrated in Figures 2A-2C is also exemplary only, and any number of barbs 52 may be provided. Moreover, the number of barbs 52 on each side of an anchor 44 may be different, the barbs 52 on each side of an anchor 44 need not be located directly across from each other (i.e., mirrored), the barbs 52 along a body 46 need not be equally spaced from each, and each barb 52 may take or be provided with a different shape. In that regard, the larger the size and/or the greater the number of the barbs 52 of an anchor 44, the more effective the anchor 44 is in grabbing a material of a cushion 30 and the more resistive the anchor 44 will be to removal from or backing out of the cushion 30. Thus, the anchors 44 of the embodiments shown in Figures 2A and 2C may be more resistive to removal from a cushion 30 than the anchors 44 of the embodiments shown in Figure 2B.

It should be noted, however, that the optimal size and shape of an anchor 44, including barbs 52, may be dependent upon the nature of the material of the cushion 30. In that regard, for a cushion 30 including a three-dimensional mesh structure formed of randomly looped and bonded filaments 60 of an extruded polymeric material or materials as previously described, the manufacturing process may result in a cushion 30 having a material with a larger or smaller cell structure. As a result, the size and shape of one or more of the anchors 44 shown in Figures 2A-2C, or anchors 44 having a different size or shape than those shown, may be best suited to the material of a particular cushion 30.

Figure 4 is another side view of a non-limiting, exemplary embodiment of a retainer 40 according to the present disclosure. As seen therein, a single anchor 44 having an inverted "Christmas tree" shape from the embodiment of the retainer 40 of Figure 2A is shown, and the retainer 40 is partially disposed in a material of a cushion 30. More specifically, the anchor 44 of the retainer is shown in phantom inserted into the material of the cushion 30, with the elongated member 42 located at a surface of the cushion 30. As previously described, the elongated member 42 of the retainer 40 may be first sewn or stitched to a trim cover 36. Thereafter, the anchor 44 of the retainer 40 is inserted into the material of the cushion 30. In such a fashion, the trim cover 36 is thereby attached to the cushion 30.

The retainer 40 of the present invention may thus replace known mechanisms, devices, systems, means, or methods for attaching a trim cover 36 to a cushion 30, such as a conventional polyurethane foam cushion, including a clip attached to a trim cover 36 and configured to cooperate with a beaded Duon^{®} attachment feature of a cushion 30, a hog ring and wire fastener, and/or any known attachment system including an attachment feature or fastener molded or formed into the cushion 30. In that regard, it is noted that the retainer 40 of the present disclosure need not be formed or molded into the material of a cushion 30. It is also noted that the retainer 40 of the present disclosure facilitates and/or enables attachment of a trim cover 36 to a cushion 30 that lacks a recess or recesses provided, formed, or created in the cushion for receiving the plurality of anchors 44, such as a cushion 30 having a three-dimensional mesh structure formed of randomly looped and bonded filaments 60 of an extruded polymeric material or materials as previously described. Nevertheless, the retainer 40 of the present disclosure is also suitable for attachment of a trim cover 36 to a cushion 30 that includes a recess or recesses, such as an elongated channel, hole, indentation, or trench provided, formed, or created therein for receiving the plurality of anchors 44, which recess or recesses may be provided in any suitable location, for example where a side bolster 32 meets a center seating portion 34 of the cushion 30 (see Figure 1).

In that regard, as seen in Figure 4, the cushion 30 includes a three-dimensional mesh structure formed of randomly looped and bonded filaments 60, only a small number of examples of which are shown, pictorially represented by randomly drawn lines for simplicity. As previously described, the second end 50 of the anchor 44 terminates in a pointed tip, and the plurality of barbs 52 extend from the body 46 in a direction away from the pointed tip of the anchor 44, which may serve or function to pierce the material of the cushion 30. As also previously described, when the anchor 44 is inserted into the cushion 30, the material of the cushion 30 (i.e., the looped and bonded filaments 60) is gripped between the body 46 and each of the plurality of barbs 52. The retainer 40 of the present disclosure thus provides a trim retainer designed to bit into a material of a cushion 30, such as strands or filaments of foamless mesh cushions or pads. The retainer 40 of the present disclosure also provides barbs or barbed attachments to enable or facilitate adhesion of a trim cover 36 to a cushion 30, such as strands or filaments of foamless mesh cushions or pads.

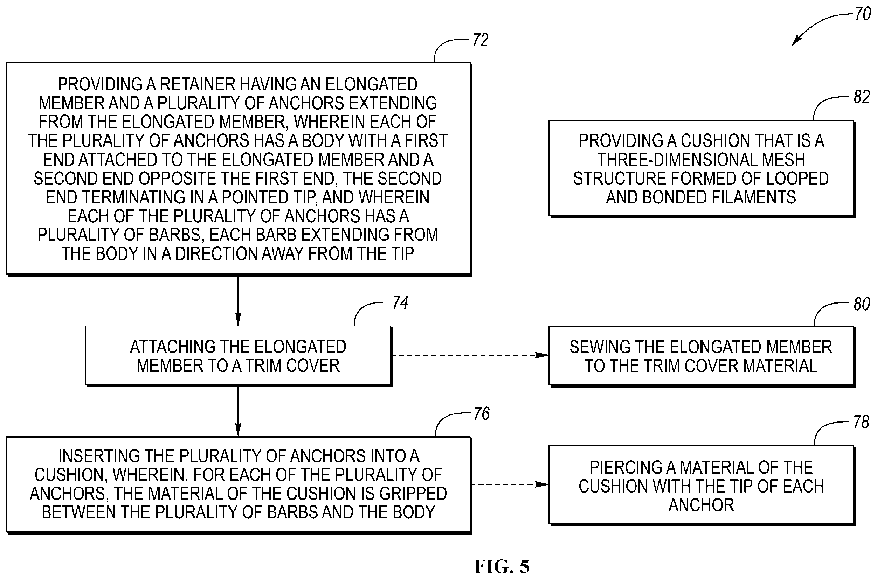

Referring next to Figure 5, an exemplary flowchart is shown illustrating a non-limiting, exemplary embodiment of a method 70 according to the present invention. As seen therein, and with continuing reference to Figures 1-4, a method 70 of assembling a seat assembly comprises providing 72 a retainer 40 having an elongated member 42 and a plurality of anchors 44 extending from the elongated member 42, wherein each of the plurality of anchors 44 has a body 46 with a first end 48 attached to the elongated member 42 and a second end 50 opposite the first end 48, the second end 50 terminating in a pointed tip, and wherein each of the plurality of anchors 44 has a plurality of barbs 52, each barb 52 extending from the body 46 in a direction away from the tip. The method further comprises attaching 74 the elongated member 42 to a trim cover 36, and inserting 76 the plurality of anchors 44 into a cushion 30, wherein, for each of the plurality of anchors 44, the material of the cushion 44 is gripped between the plurality of barbs 52 and the body 46.

According to the method 70 of assembly of the present invention, inserting 76 the plurality of anchors 44 into a cushion 30 may comprise piercing 78 a material of the cushion 30 with the tip of each anchor 44. As previously described, the elongated member 42 may comprise a planar strip and attaching 74 the elongated member 42 to the trim cover 36 may comprise stitching or sewing 80 the elongated member 42 to the trim cover 36.

Once again, according to the method 70 of the present invention the plurality of anchors 44 may be spaced apart along the elongated member 42 with an equal distance between adjacent anchors 44, although alternative spacing of the anchors 44 may be provided as previously described. As also previously described, the elongated member 42 and the plurality of anchors 44 may be or may be formed as an integral piece.

The method 70 of assembly of the present invention my further comprise providing 82 a cushion 30 that is a three-dimensional mesh structure formed of looped and bonded filaments, as previously described. As also previously described, such filaments may be extruded and formed into the three-dimensional mesh structure. Moreover, the assembly method 70 of the present invention also facilitates and/or enables attachment of a trim cover 36 to a cushion 30 that lacks a recess or recesses formed in the cushion for receiving the plurality of anchors 44, such as a cushion 30 having a three-dimensional mesh structure formed of randomly looped and bonded filaments 60 of an extruded polymeric material or materials as previously described. Nevertheless, the retainer 40 of the present disclosure is also suitable for attachment of a trim cover 36 to a cushion 30 that includes a recess or recesses provided, formed, or created therein.

## Claims

1. A retainer (40) comprising:
an elongated member (42) attachable to a cover (36), wherein the elongated member (42) comprises a planar strip; and
a plurality of anchors (44) extending from the elongated member (42), wherein each of the plurality of anchors (44) is planar and oriented in a same plane as the planar strip, and
wherein each of the plurality of anchors (44) has a body (46) with a first end (48) attached to the elongated member (42) and a second end (50) opposite the first end (48), the second end (50) terminating in a pointed tip, and wherein each of the plurality of anchors (44) has a plurality of barbs (52), each barb (52) extending from the body (46) in a direction away from the tip, and
wherein, for each of the plurality of anchors (44), a material of a cushion (30) is gripped between the body (46) and each of the plurality of barbs (52) when the anchor (44) is inserted into the cushion (30).

2. The retainer according to claim 1 wherein the elongated member (42) is sewn to the cover (36).

3. The retainer according to any preceding claim wherein the plurality of anchors (44) is spaced apart along the elongated member (42) with an equal distance between adjacent anchors (44).

4. The retainer according to any preceding claim wherein the elongated member (42) and the plurality of anchors (44) are formed as an integral piece.

5. The retainer according to any preceding claim wherein the retainer (40) is formed by injection molding, or by stamping or cutting from a sheet.

6. The retainer according to any preceding claim wherein the pointed tip pierces the cushion (30) material.

7. The retainer according to any preceding claim wherein the material of the cushion (30) comprises a mesh formed from looped and bonded filaments (60),
wherein preferably the filaments (60) are extruded and formed into a three-dimensional structure.

8. The retainer according to any preceding claim wherein the material of the cushion (30) lacks a formed recess for receiving the plurality of anchors (44).

9. A seat assembly (10) comprising:
a cushion (30);
a cover (36); and
a retainer (40) according to any preceding claim, wherein the retainer (40) attaches the cover (36) to the cushion (30).

10. A method of assembling a seat assembly (10), the method comprising:
providing a retainer (40) according to any of claims 1 to 8;
attaching the elongated member (42) of the retainer (40) to a cover (36); and
inserting the plurality of anchors (44) into a cushion (30), wherein, for each of the plurality of anchors (44), the material of the cushion (30) is gripped between the plurality of barbs (52) and the body (46).

11. The method of claim 10 wherein inserting the plurality of anchors (44) into a cushion (30) comprises piercing a material of the cushion (30) with the tip of each anchor (44).

12. The method according to any of claims 10 or 11, wherein the elongated member (42) comprises a planar strip and attaching the elongated member (42) to the cover (36) comprises sewing the elongated member (42) to the cover (36).

13. The method according to any of claims 10 to 12, further comprising providing a cushion (30) that is a three-dimensional mesh structure formed of looped and bonded filaments (60),
wherein preferably the filaments (60) are extruded and formed into the three-dimensional mesh structure.

## Patentansprüche

1. Haltevorrichtung (40), umfassend:
ein längliches Element (42), das an einem Bezug (36) angebracht werden kann, wobei das längliche Element (42) einen planen Streifen umfasst; sowie
eine Vielzahl von Ankern (44), die sich von dem länglichen Element (42) aus erstrecken, wobei jeder der Vielzahl von Ankern (44) plan und in derselben Ebene ausgerichtet ist wie der plane Streifen, und
wobei jeder der Vielzahl von Ankern (44) einen Körper (46) mit einem ersten Ende (48), das an dem länglichen Element (42) angebracht ist, sowie einem dem ersten Ende (48) gegenüberliegenden zweiten Ende (50) aufweist, wobei das zweite Ende (50) in einer Spitze endet, und wobei jeder der Vielzahl von Ankern (44) eine Vielzahl von Widerhaken (52) aufweist, wobei sich jeder Widerhaken (52) von dem Körper (46) aus in einer Richtung von der Spitze weg erstreckt, und
wobei für jeden der Vielzahl von Ankern (44) ein Material eines Polsters (30) zwischen dem Körper (46) und jedem der Vielzahl von Widerhaken (52) festgehalten wird, wenn der Anker (44) in das Polster (30) eingeführt ist.

2. Haltevorrichtung nach Anspruch 1, wobei das längliche Element (42) an den Bezug (36) angenäht ist.

3. Haltevorrichtung nach einem der vorangehenden Ansprüche, wobei die Vielzahl von Ankern (44) an dem länglichen Element (42) entlang mit einer gleichen Entfernung zwischen benachbarten Ankern (44) beabstandet sind.

4. Haltevorrichtung nach einem der vorangehenden Ansprüche, wobei das längliche Element (42) und die Vielzahl von Ankern (44) als ein integrales Teil ausgebildet sind.

5. Haltevorrichtung nach einem der vorangehenden Ansprüche, wobei das Halteelement (40) durch Spritzgießen oder durch Stanzen oder Schneiden aus einer Bahn ausgebildet wird.

6. Haltevorrichtung nach einem der vorangehenden Ansprüche, wobei die Spitze das Material des Polsters (30) durchsticht.

7. Haltevorrichtung nach einem der vorangehenden Ansprüche, wobei das Material des Polsters (30) ein Geflecht umfasst, das aus geschlungenen und gebundenen Filamenten (60) ausgebildet wird,
wobei vorzugsweise die Filamente (60) extrudiert und zu einer dreidimensionalen Struktur geformt werden.

8. Haltevorrichtung nach einem der vorangehenden Ansprüche, wobei das Material des Polsters (30) keine geformte Aussparung zum Aufnehmen der Vielzahl von Ankern (44) aufweist.

9. Sitzanordnung (10), die umfasst:
ein Polster (30);
einen Bezug (36); sowie
eine Haltevorrichtung (40) nach einem der vorangehenden Ansprüche, wobei der Bezug (36) mit der Haltevorrichtung (40) an dem Polster (30) angebracht ist.

10. Verfahren zum Zusammenbauen einer Sitzanordnung (10), wobei das Verfahren umfasst:
Bereitstellen einer Haltevorrichtung (40) nach einem der Ansprüche 1 bis 8;
Anbringen des länglichen Elementes (42) der Haltevorrichtung (40) an einem Bezug (36); sowie
Einführen der Vielzahl von Ankern (44) in ein Polster (30), wobei für jeden der Vielzahl von Ankern (44) das Material des Polsters (30) zwischen der Vielzahl von Widerhaken (52) und dem Körper (46) festgehalten wird.

11. Verfahren nach Anspruch 10, wobei Einführen der Vielzahl von Ankern (44) in ein Polster (30) Durchstechen eines Materials des Polsters (30) mit der Spitze jedes Ankers (44) umfasst.

12. Verfahren nach einem der Ansprüche 10 oder 11, wobei das längliche Element (42) einen planen Streifen umfasst und Anbringen des länglichen Elementes (42) an dem Polster (36) Annähen des länglichen Elementes (42) an dem Polster (36) umfasst.

13. Verfahren nach einem der Ansprüche 10 bis 12, das des Weiteren Bereitstellen eines Polsters (30) umfasst, das eine dreidimensionale Maschenstruktur ist, die aus geschlungenen und gebundenen Filamenten (60) ausgebildet wird.
wobei vorzugsweise die Filamente (60) extrudiert und zu der dreidimensionalen Maschenstruktur geformt werden.

## Revendications

1. Dispositif de retenue (40) comprenant :
un élément allongé (42) pouvant être fixé à une housse (36), dans lequel l'élément allongé (42) comprend une bande plane ; et
une pluralité d'éléments d'ancrage (44) s'étendant depuis l'élément allongé (42), dans lequel chacun de la pluralité d'éléments d'ancrage (44) est plan et orienté dans le même plan que la bande plane, et
dans lequel chacun de la pluralité d'éléments d'ancrage (44) a un corps (46) avec une première extrémité (48) fixée à l'élément allongé (42) et une seconde extrémité (50) opposée à la première extrémité (48), la seconde extrémité (50) se terminant par un embout pointu, et dans lequel chacun de la pluralité d'éléments d'ancrage (44) a une pluralité de barbes (52), chaque barbe (52) s'étendant depuis le corps (46) dans une direction s'éloignant de l'embout, et
dans lequel, pour chacun de la pluralité d'éléments d'ancrage (44), un matériau d'un coussin (30) est enserré entre le corps (46) et chacune de la pluralité de barbes (52) lorsque l'élément d'ancrage (44) est inséré dans le coussin (30).

2. Dispositif de retenue selon la revendication 1, dans lequel l'élément allongé (42) est cousu à la housse (36).

3. Dispositif de retenue selon l'une des revendications précédentes, dans lequel la pluralité d'éléments d'ancrage (44) sont espacés le long de l'élément allongé (42) avec une distance égale entre des éléments d'ancrage (44) adjacents.

4. Dispositif de retenue selon l'une des revendications précédentes, dans lequel l'élément allongé (42) et la pluralité d'éléments d'ancrage (44) sont formés d'un seul tenant.

5. Dispositif de retenue selon l'une des revendications précédentes, dans lequel le dispositif de retenue (40) est formé par moulage par injection, ou par estampage ou découpe à partir d'une feuille.

6. Dispositif de retenue selon l'une des revendications précédentes, dans lequel l'embout pointu perce le matériau du coussin (30).

7. Dispositif de retenue selon l'une des revendications précédentes, dans lequel le matériau du coussin (30) comprend un maillage formé de filaments (60) bouclés et liés,
dans lequel, de préférence, les filaments (60) sont extrudés et formés en une structure tridimensionnelle.

8. Dispositif de retenue selon l'une des revendications précédentes, dans lequel le matériau du coussin (30) ne comporte pas d'évidement formé pour recevoir la pluralité d'éléments d'ancrage (44).

9. Ensemble siège (10) comprenant :
un coussin (30) ;
une housse (36) ; et
un dispositif de retenue (40) selon l'une des revendications précédentes, dans lequel le dispositif de retenue (40) fixe la housse (36) au coussin (30).

10. Procédé d'assemblage d'un ensemble siège (10), le procédé comprenant :
la fourniture d'un dispositif de retenue (40) selon l'une des revendications 1 à 8 ;
la fixation de l'élément allongé (42) du dispositif de retenue (40) à une housse (36) ; et
l'insertion de la pluralité d'éléments d'ancrage (44) dans un coussin (30), dans lequel, pour chacun de la pluralité d'éléments d'ancrage (44), le matériau du coussin (30) est enserré entre la pluralité de barbes (52) et le corps (46).

11. Procédé selon la revendication 10, dans lequel l'insertion de la pluralité d'éléments d'ancrage (44) dans un coussin (30) comprend le perçage d'un matériau du coussin (30) avec l'embout de chaque élément d'ancrage (44).

12. Procédé selon l'une des revendications 10 ou 11, dans lequel l'élément allongé (42) comprend une bande plane et la fixation de l'élément allongé (42) à la housse (36) comprend la couture de l'élément allongé (42) à la housse (36).

13. Procédé selon l'une des revendications 10 à 12, comprenant en outre la fourniture d'un coussin (30) qui est une structure maillée tridimensionnelle formée de filaments (60) bouclés et liés,
dans lequel les filaments (60) sont de préférence extrudés et formés en structure maillée tridimensionnelle.
